# EUROPEAN PATENT SPECIFICATION

(11) **EP 1 204 067 B1**
(45) Date of publication and mention of the grant of the patent: **12.11.2003**
(21) Application number: 02003052.4
(22) Date of filing: 26.01.1996
(51) Int. Cl.: G06K 7/10

(54) **Portable optical scanning and pointing systems**
Tragbares optisches Abtast-und Zeigesystem
Système optique de balayage et de pointage

(30) Priority: 01.02.1995 US 381515; 29.06.1995 US 496723
(43) Date of publication of application: 08.05.2002
(62) Divisional of application: 96101136.8
(73) Proprietor: SYMBOL TECHNOLOGIES, INC., Holtsville, New York 11742-1300 (US)
(72) Inventor: Bard, Simon, Setauket, NY 11733 (US); Katz, Joseph, Stony Brook, NY 11790 (US); Heiman, F., Los Gatos, CA 95030 (US); Dvorkis, Paul, Stony Brook, NY 11790 (US); Barkan, Edward, Miller Place, NY 11764 (US); Swartz, Jerome, Old Field, NY 11733 (US); Metlitsky, Boris, Stony Brook, NY 11790 (US); Stern, Miklos, Flushing, NY 11367 (US); Krichever, Mark, Hauppauge, NY 11788 (US); DeVita, Joseph, Patchogue, NY 11772 (US); Searle, Don Symbol Technologies INC, Holtsville, NY 11742-1300 (US); Maiman, Mitchell, Holbrook, NY 11741 (US); McDonald, Jay, Sayville, NY 11782 (US); Potter, John Symbol Technologies INC, Holtsville, NY 11742-1300 (US); Chow, Gonzaga Joseph, Huntington, NY 11743 (US)
(74) Representative: Wagner, Karl H., Dipl.-Ing.

(56) References cited:
- EP-A- 0 700 012
- US-A- 5 305 181

## Description

This invention relates to an optical system for reading indicia of different light reflectivity.

Various optical readers and optical scanning systems have been developed heretofore for reading indicia such as bar code symbols appearing on the label or on the surface of an article. The symbol itself is a coded pattern of indicia comprised of, for example, a series of bars of various widths spaced apart from one another so bound spaces of various widths, the bars and spaces having different light reflecting characteristics. The readers in scanning systems electro-optically transform the graphic indicia into electrical signals, which are decoded into alphanumeric characters that are intended to be descriptive of the article or some characteristic thereof. Such characteristics are typically represented in digital form and utilized as an input to a data processing system for applications in point-of-sale processing, inventory control and the like. Scanning systems of this general type have been disclosed, for example, in U.S. Patent Nos. US-A-4,251,798; US-A-4,369,361; US-A-4,387,297; and US-A-4,409,470; 4,760,248; 4,896,026, all of which have been assigned to the present applicant. As disclosed in the above patents, one embodiment of such scanning systems includes, inter alia, a hand held, portable laser scanning device supported by a user, which is configured to allow the user to aim the scanning head of the device, and more particularly, a light beam, at a targeted symbol to be read.

Such prior art hand held devices generally incorporate a light-receiving module which receives the light that has been reflected from the bar code symbol and determines, from the reflected pattern, the sequences of bars and spaces within the symbol. The unit may also incorporate decoding circuitry to decode the received information and to recover the underlying data (for example the alphanumeric data) which the bar code symbol represents.

It may in some circumstances be disadvantageous for the light generating and emitting module to be housed within the same unit as the light-receiving module and the decoding circuitry. In the first place, locating everything within the main housing requires that the bar code to be read is positioned so that most or at least a substantial proportion of the reflected light returns to the unit along the same path as the emitted light. It might not always be convenient for a user to position the bar code reading and/or the bar code so that the light is reflected back along the same path in that way. Secondly, locating everything within the same unit means that the unit has to be physically rather large and relatively heavy. Users may not find it easy to operate for long periods.

In the field of laser pointers, it is known to provide small hand held units which users can use at conferences, seminars or the like for pointing purposes. The visible spot of the laser beam, when shone onto a screen, indicates to the audience the point of interest, and enables the lecturer to dispense with the traditional physical pointer. Although modern laser pointers are relatively small and compact, they nevertheless still have to be grasped in the hand of the lecturer, which naturally restricts the lecturer's user of that particular hand. Typically, the laser pointer has to be put down every time the lecturer wishes to do something else, such as to turn over a page in his or her notes, or to operate and overhead projector.

EP-A-0 700 012 disclose a portable optical scanning system worn by a user for reading indicia of differing light reflectivity. The system comprises an optical scan module including a light emitter for emitting light onto the indicia; and a light detector for detecting the reflection of light from the indicia. In one arrangement, the optical scan module is adapted to be mounted on the user's finger. A first peripheral module including the light detector is mounted on an arm of the user. In this arrangement the light detector is located in a housing separate and apart from the optical scan module. EP-A-0 700 012 falls within the terms of Article 54(3) EPC.

It is a general object of the present invention at least to alleviate some of these problems of the prior art.

It is a further object, to provide an optical system for reading indicia with improved ergonomics, and which will be easier for a user to operate for long periods.

Additional objects, advantages and novel features of the present invention will become apparent to those skilled in the art from this disclosure, including the following detail description, as well as by practice of the invention. While the invention is described below with reference to preferred embodiments, it should be understood that the invention is not limited thereto. Those of ordinary skill in the art having access to the teachings herein will recognize additional applications, modifications and embodiments in other fields which are within the scope of the invention as disclosed and claimed herein and with respect to which the invention could be of significant utility.

According to the present invention there is provided an optical system for reading indicia of different light reflectivity as defined by claim 1.

In a preferred embodiment, the optical module incorporates or forms part of a ring which is desirably worn on an index finger of the user. To scan the indicia, the user points his or her index finger in the relevant direction. An automatic scanning mechanism may be incorporated within the module, so that the emitted beam automatically scans back and forth across the indicia (either in a two-dimensional scan or in a one-dimensional scan) even when the module is held stationary.

Switching means may be provided for actuating the optical module. Preferably, these may comprise a switch or button, attached to or forming part of the ring or part of a housing secured to the ring, whereby the user can operate the device merely by pressing the button with his or her thumb. This is particularly convenient when the module is arranged to be worn on the index finger. Alternatively, a pull-cord may be provided which is secured to a second ring, arranged to be worn on a finger of the user's hand adjacent to the finger which is wearing the optical module. By a suitable movement of the fingers, for example by flexing the second finger, the cord is pulled thereby operating the device.

It will of course be understood that there are many other possibilities for actuating the device, including switch mechanisms which operate under voice control, and mechanisms which determine when the user's hand is being moved in a scanning motion.

The first peripheral module may incorporate radio frequency communication means, enabling the module to communicate with either a fixed base unit or, in some embodiments, a second peripheral module. In one preferred arrangement, the second peripheral module may be worn on the user's other arm. The second peripheral module may also incorporate radio frequency communication means, allowing communication between the second module and the first module, and (preferably at a different frequency) between the second module and a fixed base unit.

The optical module, the first peripheral module and the second peripheral module are all preferably operated by means of portable batteries, desirably relatively compact batteries which can be located within the respective housings.

In further embodiments, the optical module may be adapted to be held in the hand of a user and may be either gun-shaped or pen-shaped. The optical module could also be mounted to a stationary support.

The invention may be carried into practice in a number of ways, and several specific embodiments will now be described, by way of example, with reference to the drawings, in which:
Figure 1a depicts a portable optical scan system which is not in accordance with the present invention;
Figure 1b depicts a portable optical scan system in accordance with an embodiment of the present invention;
Figure 2 illustrates schematically the ring unit and the wrist unit shown in Figures 1a and 1b;
Figure 3 depicts a portable optical scan system which is not in accordance with the present invention;
Figure 4 depicts a laser pointer which is not in accordance with the present invention;
Figure 5 shows details of the laser pointer of Figure 4;
Figures 6A and 6B illustrate the triggering mechanism which may be used with the laser pointer of Figure 4, or with either of the portable optical scan systems of Figures 1 or 3;
Figure 7 illustrates a hand-held laser pointer/laser scanner;
Figure 8 shows schematically a band for securing a pointer or scanner to the user's body comprises a flexible battery;
Figure 9 represents a practical arrangement of the device shown in Figure 8;
Figure 10 shows a storage box for use with the portable optical scan system of Figure 1A.
Figure 11 shows a further arrangement in which the optical module comprises a gun shaped device;
Figure 12 shows a further arrangement in which the optical module comprises a pen shaped device;
Figure 13 shows a further arrangement in which the optical module is mounted to the headgear of a user;
Figure 14 shows one arrangement of a watch/terminal having a slide-out portion; and
Figures 15a,15b and 15c show a further exemplary watch/terminal having a fold-out portion.

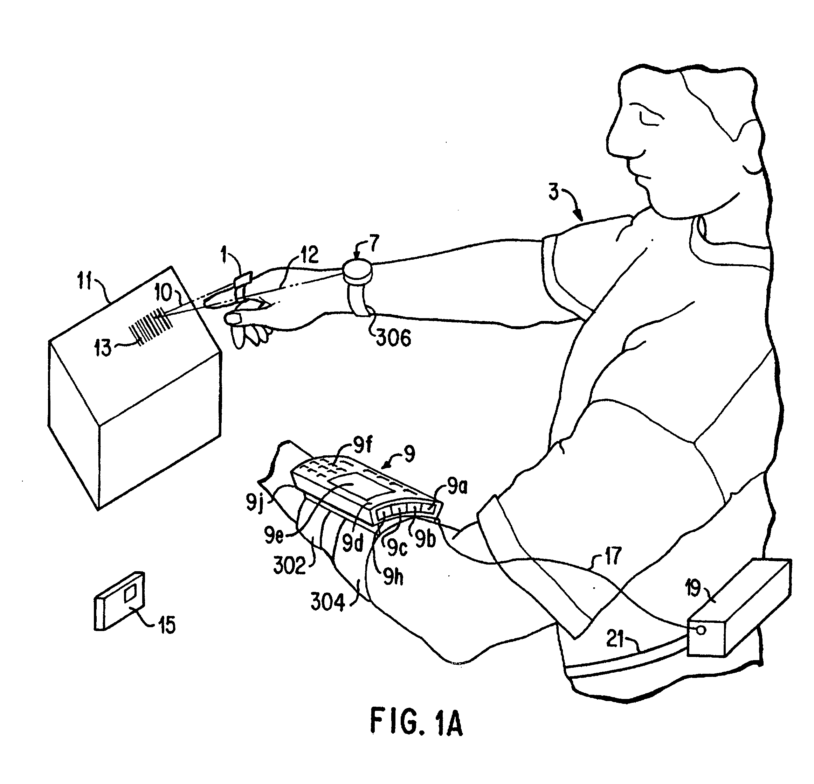

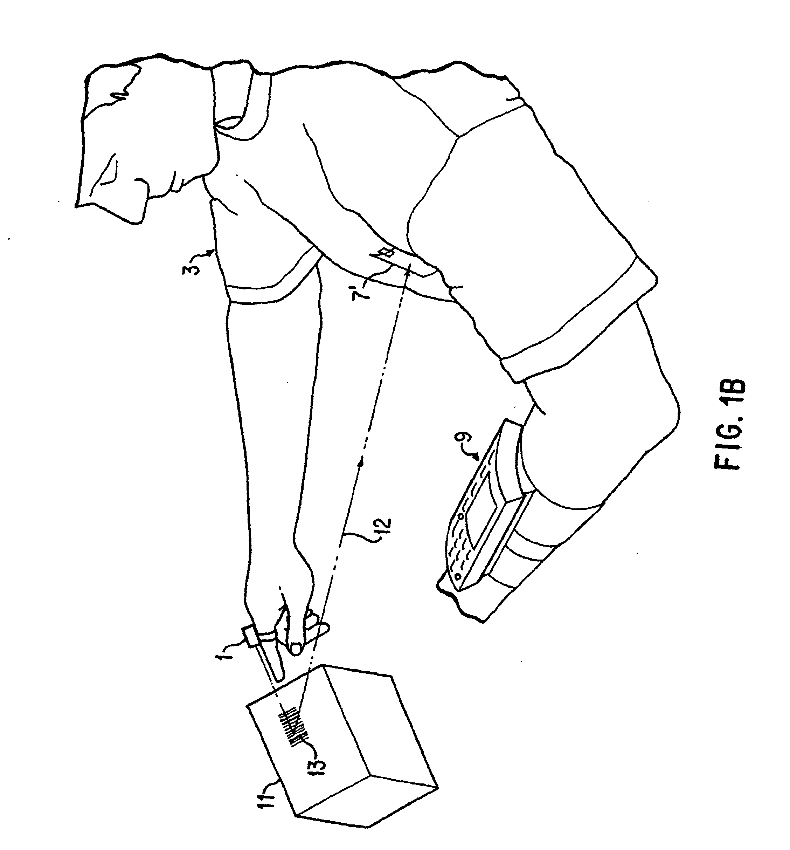

Figure 1a shows a portable optical scan system which is not in accordance with the present invention. An optical scan module 1 is detachably mounted on a single finger of a user 3 using a ringshaped mounting. The detachable mounting may be of any number of conventional types suitably adapted for its ease of use for the desired application. For example, a ball and flexible socket mounting, or a slide mounting could be used. Other mountings with movable restraining members might also be used.

In additional to the optical scan module 1, the user 3 wears a first peripheral module 7, on the wrist, and a second peripheral module 9 on the other arm. As will be clear from the Figure, the scan module 1 emits a scanning laser beam 10 which the user directs towards a bar code symbol 13 to be read. The bar code symbol may be printed on or otherwise attached to on article 11, details of which the user 3 wishes to obtain for example for inventory or for sale purposes. The scanning beam 10 is reflected from the bar code symbol 13, and the reflected light 12 is detected by the first peripheral module 7.

Figure 1b illustrates an embodiment of the invention and is a variant of Figure 1a in which the reflected light 12 returning from the bar code symbol 13 is detected by a peripheral module 7' which is secured to the user's clothing. In the variant shown, the peripheral module comprises a detector which is clipped on to the breast pocket of the user's shirt or shift. Other arrangements (not shown) could of course be envisaged, in which the peripheral module 7' is secured to or forms part of other articles of clothing.

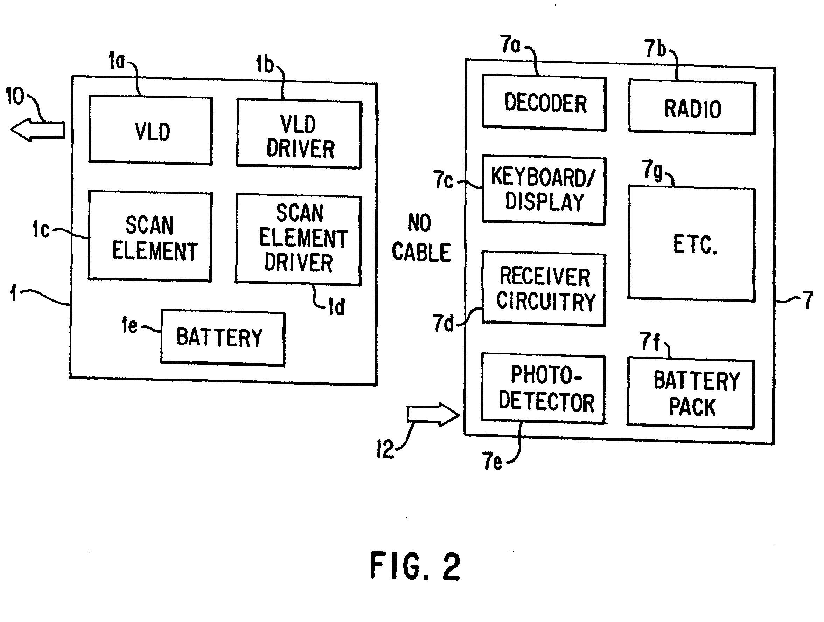

Figure 2 illustrates schematically the internal features of the scan module 1 and the first peripheral module 7. The module 1 incorporates a device for generating and scanning the light beam 10, desirably a visible laser diode (VLD) 1a, having a driver 1b. Scanning of the beam 10 is achieved by means of a scan element 1c, and a scan element driver 1d. Power is provided by means of a small battery 1e.

The first peripheral module 7 comprises a photodetector 7e and receiver circuitry 7d which are together arranged to detect the returning light beam 12. The output from the receiver circuitry is passed to a decoder 7a which is arranged to reconstitute the alphanumeric information which the bar code symbol 13 represents. The first peripheral module may also include a keyboard and/or display 7c along with other possible features 7g such as for example a time display so that the module 7 doubles as an ordinary watch when it is not in use as part of the optical scan system. A radio frequency (RF) or other wireless transmitter 7b, along with a battery pack 7f or other power supply completes the unit.

In use, the decoded information emanating from the decoder 7a is passed by wireless link from the radio 7b to the second peripheral module 9 which is located on the other arm or wrist of the user. The radio transmitter 7b could be a transceiver which is also capable of receiving signals from the second peripheral module 9 or from a separate base station 15.

The second peripheral module 9 incorporates a radio receiver 9a and a radio transmitter 9b for communicating with the first module 7 and/or with the base unit 15. Typically, the respective transmission frequencies will be different. The second peripheral module 9 further includes digitizing and processing circuits 9c which convert the transmitted analog signal to a digital signal and decode the signal in a conventional manner. An indicator light, beeper or audio transducer 9d signals the user when the decoding has been satisfactorily accomplished. Such notice could also or alternatively be provided by information displayed on a display unit 9e. A memory storage device 9h is also preferably included for temporary storage of the decoded data. A keypad 9f and/or touch screen may be used for inputting data to the system. A battery 9j is provided to supply power to the secondary peripheral module. Alternatively, or in addition, power may be supplied via an external lead 17 from a separate power supply 19 which is secured to the body of the user, for example on a belt 21.

Depending upon the preference of the user, the second peripheral module could be worn on the right arm, or wrist, like a watch (and in fact, may function as a watch) and the optical scan module 1 and the first peripheral module on the left. In an alternative (not shown) the second peripheral module 9 could be dispensed with, with all the features of that unit instead being incorporated within the first peripheral module 7. This would of course be expected to make the first peripheral module rather larger than is shown in the drawing.

It will be noted that in the arrangement shown in Figures 1a and 1b, there is no cable or other physical connection between the optical scan module 1 and either of the first or second peripheral modules. This improves the wearability of the system, and the likely user acceptance. It is also rather safer, since the lack of wires means that there is less to get caught as the user moves around, perhaps undertaking a variety of different tasks while wearing the devices shown.

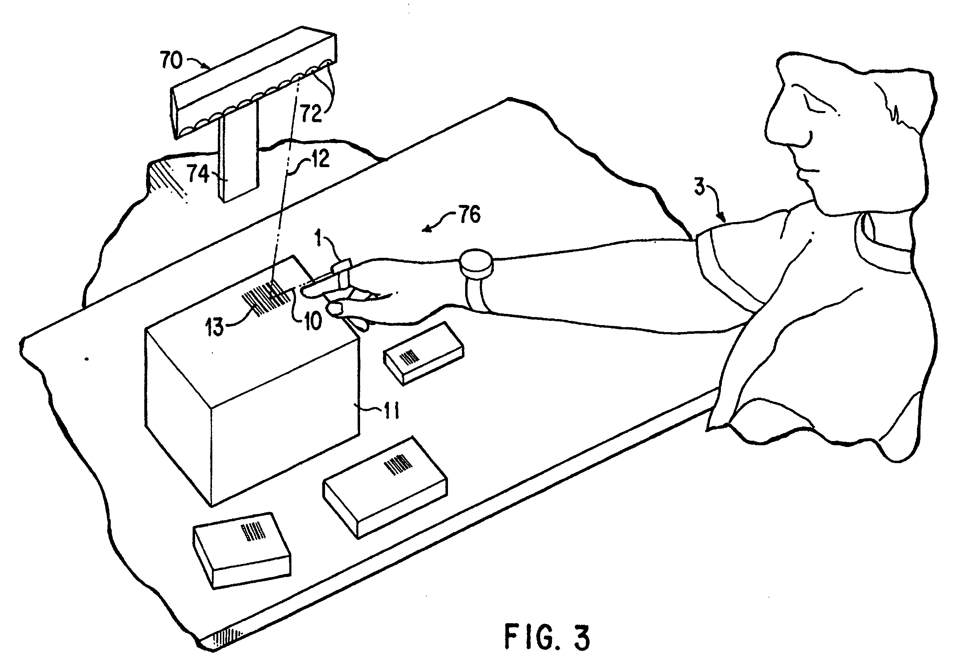

An arrangement which is not in accordance with the invention is shown schematically in Figure 3. In this arrangement, the light 12 which is reflected from the bar code symbol 13 is detected by a separate detector unit 70 which comprises a fixed bank of photodetectors 72 which look down on the surface of the article 11 so as to detect the reflected light. The detector unit could be mounted to a stand 74 which is positioned adjacent a conveyor 76 along which the item 11 is passing. Alternatively, the detector unit 70 could be mounted in or secured to a cash register, could be mounted to the ceiling, or may be suspended from the ceiling by a cable similar to a hanging lamp, or could be mounted within a tunnel which surrounds or at least partially surrounds the conveyor.

In this arrangement, the optical scan module 1 is preferably the same as the scan module illustrated in Figures 1 and 2, with or without the scan element 1c and the scan element driver 1d. If these are not provided within the module, the user has to manually scan the beam 10 across the bar code symbol 13 to be read. As a further alternative (not shown) a hand held pointer or hand held scanner could instead be used, but in each case the detectors are fixedly mounted over the scanned surface.

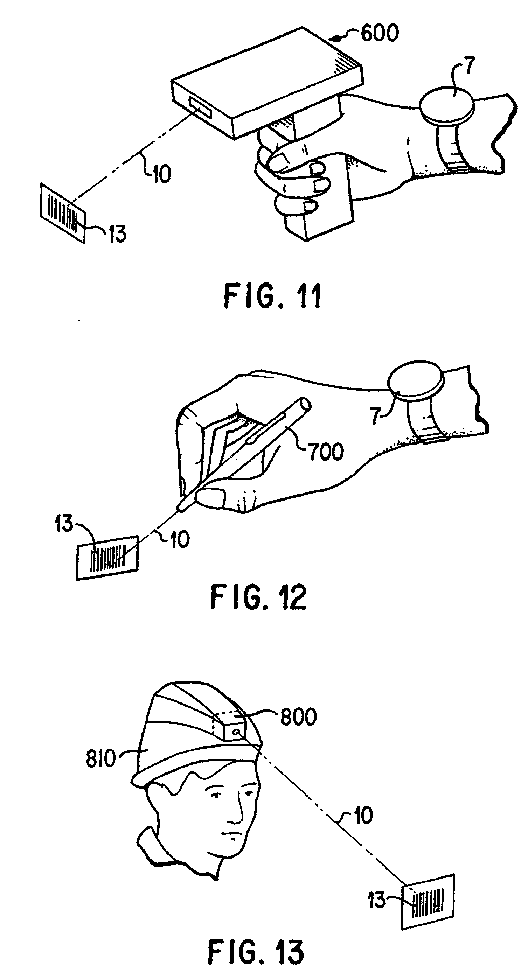

In the embodiment illustrated in Figure 1b, the module for generating the light beam 10 takes the form of or is incorporated within a ring which is worn on the user's finger. However, in other embodiments the ring 1 could be replaced by other types of optical module, some of which are shown schematically in Figures 11 to 13. In Figure 11, the ring 1 is replaced by a hand-held gun-shaped device 600, which the user merely aims at the bar code 13 to be read. The device 600 automatically scans the beam 10 across the bar code 13.

In Figure 12, the optical module takes the form of a pen-shaped device 700. Again, the pen incorporates a miniature scanner for scanning the beam 10 automatically across the bar rode 13.

In Figure 13, an optical module 800 is provided in head-gear 810 worn by the user. The module 800 automatically scans the beam 10 across the bar code 13,

In Figures 11,12 and 13, light reflected back from the bar code is picked up by a detector 7' (Figure 1b) attached to the user's clothing.

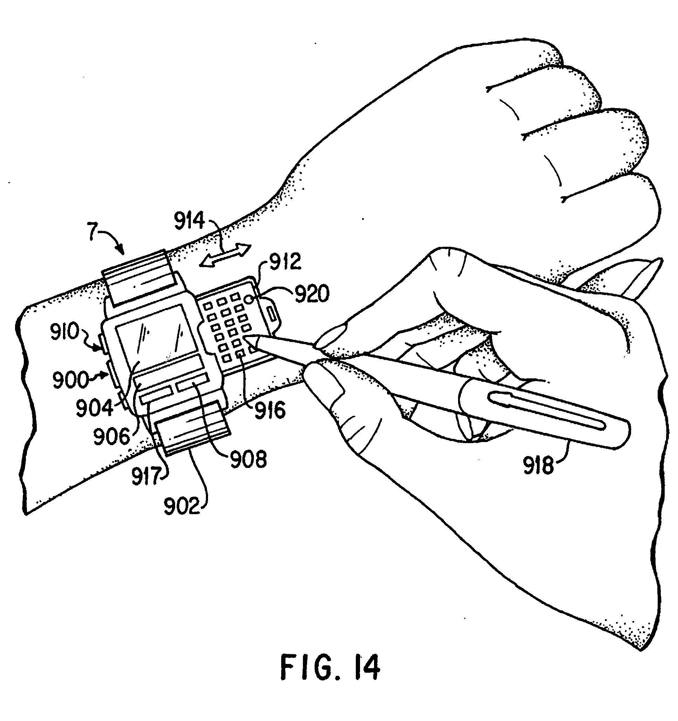

Turning now to Figure 14, there is shown a first peripheral module, namely the wrist unit 7 shown schematically in Figures 1a,11 and 12.

The module 7 comprises a body portion 900 which is secured to the user's wrist by a strap 902, in the manner of a wrist watch. The body portion has a display 904, a miniature microphone 906, a photodetector 908, a transmitter unit 917 and a plurality of function keys 910. Beneath or within the body portion 900 there is stored a key pad 912 which can be slid in and out in the direction of the arrow 914 for access to the keys 916. The keys may be actuated by means of a pen or stylus 918.

In use, the unit receives at the photodetector 908 light which has been reflected from the bar code, and it automatically transmits a signal representative of the information received to a second peripheral unit, for example the arm unit shown in Figure 1a. If the user wishes to send an audio message to the second peripheral unit, that may easily be achieved simply by speaking into the microphone 906. The wrist unit then transmits the spoken words via radio communication from the transmitter 917 to the appropriate remote station.

Instead of or in addition to the photodetector 908 on the body 900, there may be a photodetector 920 on the keypad. In one preferred arrangement, the keys 916 on the keypad may relate to the bar code reading functions, with the keypad simply being slid back out of the way when those functions are no longer needed. The unit may then operate as a normal wrist watch, with the time being indicated on the display 904, and the watch being controllable by the function keys 910.

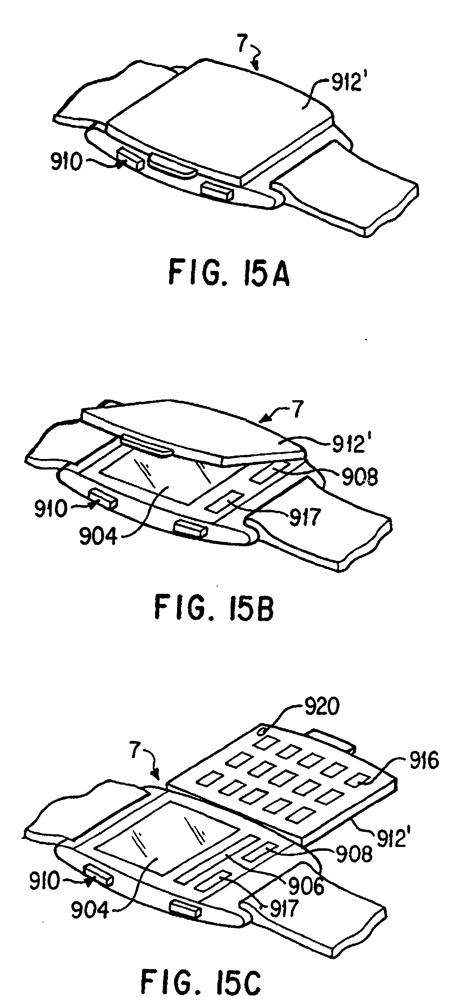

An alternative arrangement is shown in Figures 15a to 15c. This corresponds generally to the arrangement of Figure 14, and like features are marked with like reference numerals. The only difference is that the slidable keypad 912 in Figure 14 is replaced in Figure 15 with a hinged keypad unit 912'. In the closed position, shown in Figure 15a, the keypad acts as a cover for the unit. Hinging the cover back, reveals the keys 916, and in the preferred arrangement the photodetector 920.

It is anticipated that the watch/terminal configuration shown in Figures 14 and 15 may find applications in fields other than the optical scanning of indicia.

Where the microphone 906 is not required, it may be omitted.

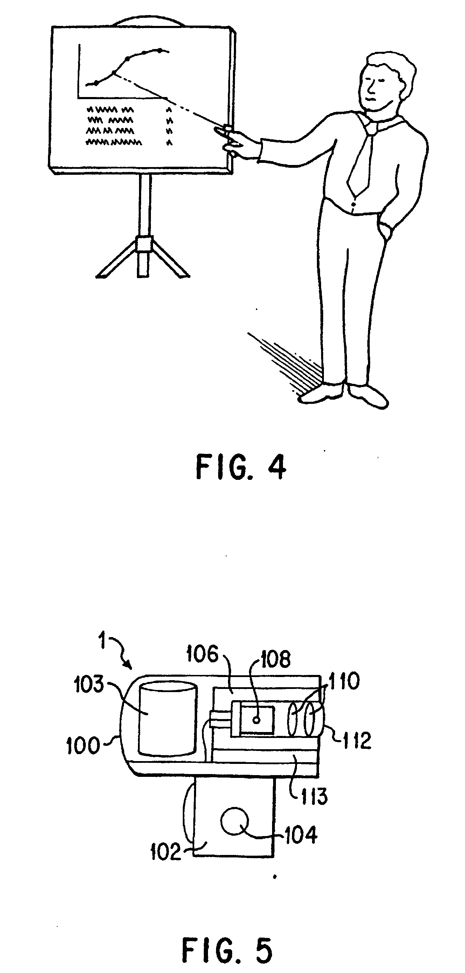

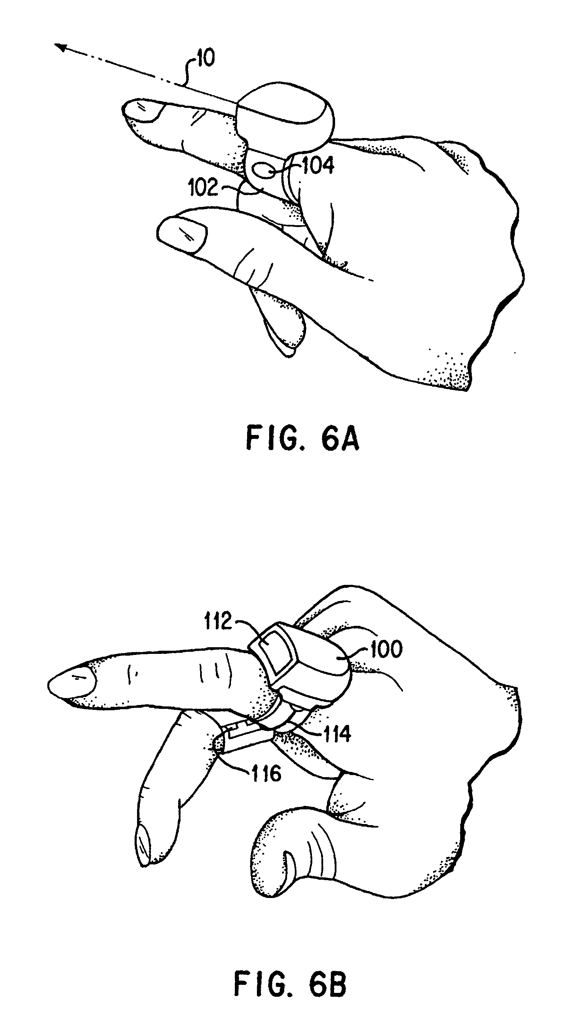

Reference should now be made to Figures 5 and 6 which illustrate certain preferred features of the laser pointer. The laser pointer shown in Figures 5 and 6 is equally applicable both to the application of Figure 4 and the application of Figures 1a,1b and 2.

The laser pointer 1 comprises a ring or shank portion 102, adapted to be worn on the finger of the user, to which is secured an upper housing portion 100. Within the housing is a battery 103 which provides power to a visible laser diode (VLD) or other light source 108. The VLD is mounted to a metal holder/heat sink 106. Light generated from the VLD passes through an optical system 110 comprising a plurality of lenses, out through an exit window 112. The optical system preferably provides that the beam 10 is collimated or at least quasi-collimated. Electronic circuitry 113 is provided which maintains the laser output at a predetermined level, and also acts as a trigger mechanism.

A trigger button 104 is provided on one side of the ring 102, where is can be actuated by the user's thumb. In this way, the user can easily switch the laser beam on and off.

Another alternative and/or additional switching mechanism may be provided by means of a separate ring 116 which is attached to the user's middle finger and which is secured to the ring 102 by means of a cord 114. As is shown in Figure 6B, the user may operate the device by flexing the middle finger, and so pulling on the cord. This could be done either by bending the middle finger with respect to the index finger, or by pulling the middle finger away from the index finger.

A device of this sort is both easy and convenient for a lecturer to wear, and it also allows free use of the hand at all times. Because the ring is preferably mounted to the index or forefinger, pointing accuracy is likely to be increased.

An alternative and/or additional switching mechanism may be provided by the use of a limited range proximity sensor located on the front or side surface of the ring 102. When the user wishes to turn the unit on, a slight movement of the thumb closer to the index finger will switch the unit on, thus avoiding the effort required for the thumb to press a trigger switch.

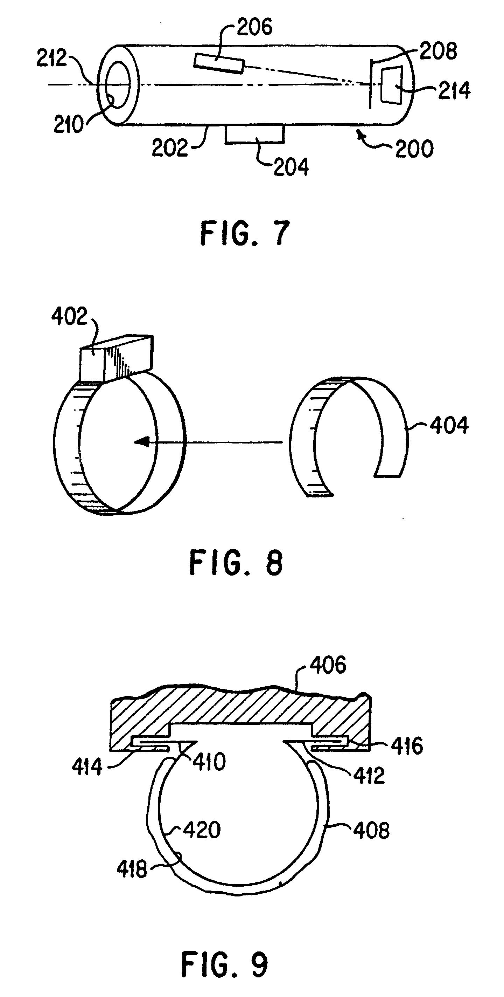

Figures 7 illustrates, schematically, a hand-held laser pointer 200 which is not an embodiment of the invention. The pointer is capable either of providing a fixed laser beam, for pointing purposes, or a scanning laser beam. Whereas a fixed laser beam generates a point or dot, that can be aimed at a screen, a scanning beam generates a line or a circle. This especially convenient if the user wishes to underline or to circle a sentence or a figure that is being pointed to.

The pointer shown in Figure 7 incorporates a hand-held body 202, having a manually actuable multi-positioned switch 204. Inside the body 202 there is a short wavelength VLD (visible laser diode) 206 which directs a beam onto a small, micro-machined mirror 208. This deflects the beam out of a window 210 in the housing, thereby providing a pointing beam 212. A scanning element 214 is provided for selectively oscillating the mirror 208, thereby causing the beam 212 to be scanned.

In a first position of the switch 204, the laser diode 206 is switched off, and no beam is produced. In a second position, the laser diode is switched on and is reflected from the stationary mirror 208, thereby providing a fixed pointing beam 212. In a third position of the switch, the scanning element 214 is actuated, causing the beam 212 to be scanned, thereby generating a visible line on the surface that is being pointed to. The scanning is in one dimension so that the resultant line on the screen is straight. In an alternative arrangement, however, the scanning element 214 could cause the beam 212 to be scanned in two directions, thereby forming any desired type of lissajous, such as a circle, on the screen. More complex scanning arrangements could also be envisaged, so that for example the image projected onto the screen is a square or other desired figure.

If the trigger 204 is a multi-position trigger, the device could provide a projected straight line in one position of the trigger, and a projected circle in another position. Different positions of the trigger could also provide different lengths of line and/or different sizes of circle or other images that are being projected.

Scanning of the beam 212 of course reduces the visibility of the image with respect to the visibility of the dot generated by a fixed beam. To compensate, the laser output power is increased according to the position of the trigger 204.

Instead of being hand-held, the device shown in Figure 7 may be built into a ring, and in particular it may be built into any one of the rings that have previously been described. Naturally, in such a case, the trigger 204 will be replaced with an appropriate trigger or switch on the ring itself. For example, if the arrangement of Figure 7 is built into the ring shown in Figure 6, the trigger 204 is merely replaced by the trigger button 104 (Figure 6A) or the cord 114 (Figure 6B). It will of course be appreciated that, where appropriate, the button and/or cord may be multi-position. Alternatively (not shown) there may be several separate switches, one of which for example produces a fixed beam and another of which produces a scanning beam.

Batteries for wearable devices of the types which have already been described typically occupy a significant proportion of the device's volume, and additionally contribute to its weight. Where substantial power is required, such as for example the devices illustrated in Figures 1 to 3, a separate battery pack 19 is often the most convenient way to provide the power that is needed. However, power may instead or in addition be provided by a thin flexible battery which forms part of the band that wraps around the arm, wrist or finger of the user. Specifically, in Figure 1A the wrist band 306 could be such a battery, as could be the arm bands 302,304. In Figure 5, the ring 102 could be a battery.

Preferably, the battery is of the lithium polymer rechargeable type, which is simply cut into the appropriate shape. Such batteries may provide sufficient power, on their own, for operation of some devices; in other cases, they may be used as an auxiliary battery, thereby reducing the size of the additional cells that may be necessary.

Figure 8 illustrates the concept in schematic form. A flexible battery strip 404, preferably a lithium polymer battery, is formed into a ring shape and is attached to a scanner and/laser pointer 402. Depending upon the size of the device, the band 404 may fit around a finger, a wrist or an arm of the user.

Figure 9 illustrates a practical arrangement in more detail. A flexible battery strip 408 is attached to two circularly-shaped snap springs 418,420. One snap spring 418 is attached to the positive battery terminal, and the other 420 to the negative battery terminal. At one end of the spring 418 there is a contact portion 410, while at the opposite end of the other spring 420 there is a similar contact portion 412. These fit into corresponding grooves 414,416 in the lower surface of the scanner/laser pointer 406, thereby providing the necessary electrical power.

The exact shape and configuration of the battery and the contacts is not of course critical. In the arrangement shown in Figure 9, the springs 418,420 could be in the form of thin, sprung wires. Alternatively, they could take the form of flat leaf springs, which extend out of the plane of the diagram. In the first case, the scanner/laser pointer 406 is provided with *sockets* 414,416 in the form of blind bores which receive the contact portions 410,412. Alternatively, where the springs take the form of leaf springs, the contact portions 410,412 may simply be slid into appropriate grooves 414,416 in a direction perpendicular to the plane of the figure. In either case, the snap springs 418,412 are preferably incorporated within the plastic protective jacket of the battery during the manufacturing process.

To make it easier to put the device on and to take it off, an alternative arrangement (not shown) provides for one end of the battery to be hinged to the underside of the scanner/laser pointer. The other end is secured by an easily-releasible clasp. To put the device on, or to take it off, the user merely releases the clasp and hinges the battery away from the underside of the scanner/laser pointer.

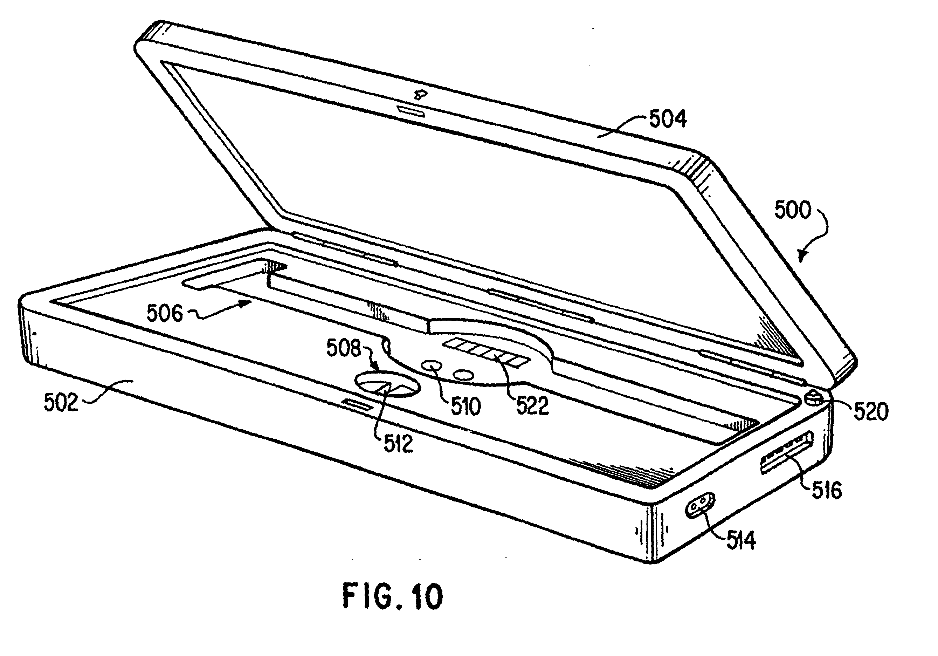

Figure 10 shows a storage box 500 which is suitable for use with the system shown in Figure 1A. The box comprises a base portion 502 and a lockable hinged lid portion 504. Within the base portion 502 there is a first recess 506 for storing the watch 7 (Figure 1A) and a second recess 508 for storing the ring 1 (also Figure 1A). In addition to providing convenient and secure storage, the box 500 incorporates a battery charger (not shown) to recharge any battery that may be incorporated within the watch 7 and/or the ring 1. To that end, when the watch is placed within the recess 506, its rear surface comes into contact with electrodes 510. Likewise, when the ring is placed in the recess 508, with the band portion pushed down into a slot 512, it comes into contact with further electrodes (not shown). Power is provided to these electrodes via a mains supply which is plugged into a socket 514 on the outside of the box. The electrodes become live, thereby recharging the batteries (for example overnight) when the lid 504 is closed, thereby closing a microswitch 520.

The watch 7 of Figure 1A may be used to store data, and may accordingly have a memory chip inside it. When the watch is placed in the recess 506, an electrical contact on its rear surface abuts a corresponding contact 522 at the base of the recess. The data within the watch may then automatically be downloaded, or downloaded on request, via a data socket 516 to an external computer (not shown).

## Claims

1. An optical system for reading indicia (13) of different light reflectivity, said system comprising:
an optical module (1) having a light emitter for generating and emitting a scanning light beam for illuminating indicia (13) to be read; and
a first peripheral module (7'), housed separately and apart from said optical module, said first peripheral module (7') having a light detector for detecting the reflection of the scanning light beam from said indicia and producing electrical signals responsive to the light received,
wherein said first peripheral module (7') is attached to a garment worn by the user.

## Patentansprüche

1. Optisches System zum Lesen von (Kenn-)Zeichen (13) mit unterschiedlichem Lichtreflexionsvermögen, wobei das System folgendes aufweist:
ein optisches Modul (1) mit einem Lichtemitter zum Erzeugen und Aussenden bzw. Emittieren eines Scan-Lichtstrahls zum Beleuchten der zu lesenden (Kenn-)Zeichen; und
ein erstes Neben- bzw. Peripherie-Modul (7'), das separat und entfernt von dem optischen Modul in einem Gehäuse aufgenommen ist, wobei das erste Peripherie-Modul (7') einen Lichtdetektor aufweist zum Detektieren der Reflexion des Scan-Lichtstrahls von den (Kenn-)Zeichen und zum Erzeugen elektrischer Signal ansprechend auf das empfangene Licht, wobei das erste Peripherie-Modul (7') an einem von dem Verwender getragenen Kleidungsstück befestigt ist.

## Revendications

1. Système optique pour lire des repères (13) ayant des pouvoirs réflecteurs optiques différents, le système comprenant :
un module optique (1) comprenant un émetteur de lumière pour produire et émettre un faisceau lumineux de balayage pour éclairer des repères (13) à lire ; et
un premier module périphérique (7') logé séparément et à l'écart du module optique, le premier module périphérique (7') comprenant un photodétecteur pour détecter la réflexion du faisceau de lumière de balayage à partir des repères et produire des signaux électriques en réponse à la lumière reçue,
dans lequel le premier module périphérique (7') est fixé à un vêtement porté par l'utilisateur.
